Europäisches Patentamt

European Patent Office

Office européen des brevets

(19)

(11) Publication number: **0 212 758 B1**

# EUROPEAN PATENT SPECIFICATION

(12)

(45) Date of publication of patent specification: **17.03.93**    (51) Int. Cl.⁵: **C01B 3/38**

(21) Application number: **86201439.6**

(22) Date of filing: **19.08.86**

(54) **Process for the preparation of synthesis gas from a hydrocarbon-containing feed.**

(30) Priority: **26.08.85 NL 8502341**

(43) Date of publication of application:
**04.03.87 Bulletin 87/10**

(45) Publication of the grant of the patent:
**17.03.93 Bulletin 93/11**

(84) Designated Contracting States:
**AT BE DE FR GB IT NL**

(56) References cited:
**FR-A- 1 410 951**
**FR-A- 2 372 116**
**GB-A- 991 523**
**GB-A- 1 407 961**
**US-A- 2 700 598**

**CHEMICAL ABSTRACTS, vol. 86, no. 18, 5th February 1977, page 147, abstract no. 123846p, Columbus, Ohio, US; & SU-A-542 721 (E.K. NAZAROV) 15-01-1977**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **van Klinken, Jakob**
**Carel van Bylandtlaan 30**
**NL-2596 HR The Hague(NL)**
Inventor: **Mink, Bernardus Herman**
**Carel van Bylandtlaan 30**
**NL-2596 HR The Hague(NL)**
Inventor: **de Graaf, Johannes Didericus**
**Carel van Bylandtlaan 30**
**NL-2596 HR The Hague(NL)**

## Description

The present invention relates to a process for the preparation of synthesis gas for the manufacture of middle distillates from a hydrocarbon-containing feed characterized by the following steps:

a) 50-99 %v of the hydrocarbons present in the feed is partially converted with steam into a product containing $H_2$ and CO at an elevated temperature from 400-1500 °C, a pressure from 3-50 bar, and at a space velocity from 600-1350 l(S.T.P) hydrocarbon-containing feed/l catalyst/hour and from 3500-4500 l(S.T.P.) steam/l catalyst/hour,

b) product from step a) and any remaining part of the feed is subjected to autothermal catalytic partial oxidation with an oxygen-comprising gas at a temperature from 600-1100 °C, a pressure from 10-50 bar and a space velocity relating to the product of step b) from 5000-10000 l-(S.T.P.)/l catalyst/hour, and

c) $CO_2$ is removed from the product obtained from step b), and wherein at least part of the $CO_2$ removed in step c) is led into step a) and/or b),

wherein at least a part of a light fraction is also led to step a), which light fraction is obtained by converting at least some of the synthesis gas obtained in step c) into light and heavy hydrocarbons at a temperature of 125-130 °C and a pressure of 5-100 bar in the presence of a catalyst and separating the light fraction from a heavy fraction, and that the possible other part of the light fraction is burned in order to generate at least some of the heat needed in step a) and wherein the said part that is led to step a) is 40 to 90 %v of the total fraction.

The hydrocarbon-containing feed employed in step a) may furthermore contain organic compounds containing oxygen. Preferably, gaseous and liquid hydrocarbons, and in particular normally gaseous hydrocarbons, are employed as feed components. The process according to the present invention is particularly suited for the preparation of synthesis gas for the manufacture of middle distillates from methane or natural gas.

Step a) is preferably carried out at a temperature from 500 - 900 °C, and at a pressure from 15 to 30 bar.

Step a) can be performed with or without a catalyst. If no catalyst is employed, the temperature will preferably lie between 1000 and 1500 °C. However, preferably a catalyst is employed, in which case the temperature applied will preferably lie between 500 and 1000 °C. Suitable catalysts preferably contain nickel, optionally applied to a carrier such as alumina.

Tubular reactors are preferably used for carrying out steps a) and b).

The various steps of the process according to the invention be carried out either discontinuously, semi-continuously or continuously. Preferably, the whole process is carried out continuously with a solid-, moving-, or fluidized bed of catalyst particles being used in step a); a solid bed being preferred.

The space velocity of the hydrocarbon-containing feed and steam is preferably from 700 - 1000 and from 3800 - 4200 l(S.T.P.)/l catalyst/hour, respectively. "S.T.P." means Standard Temperature of 0 °C and Pressure of 1 bar abs. throughout the specification.

The quantity of hydrocarbons which in step a) are converted into the product containing $H_2$ and CO is between 50 and 99%v of the total quantity of hydrocarbons present in the feed for step a).

The product obtained from step a), which contains, besides unconverted hydrocarbons, $H_2$ and CO, can also contain $CO_2$ and $H_2O$, and is passed to step b) where it is partially oxidized with the aid of an oxygen-comprising gas in the presence of a catalyst. The quantity of $H_2$ and CO in the product obtained from step a) generally lies between 80 and 90%v on the basis of dry gas.

Hydrocarbons remaining unconverted in step a) are converted in step b) at least partially into CO and $H_2$. This reaction is exothermic.

Air or an oxygen-comprising gas with an oxygen content greater than that of air can be applied in step b). Preferably, an oxygen-comprising gas with an oxygen content of 90-100%v is employed. Most preference is given to substantially pure oxygen, which is understood to mean a gas that, besides oxygen, contains no more than 0.5%v of other components, such as $N_2$ or Ar.

In step b), the space velocity relating to the reaction product of said step is advantageously from 7000 - 9000 l(S.T.P.)/l catalyst/hour.

In principle, any catalyst known in the art for the conversion of hydrocarbons (and optionally oxygen-containing organic compounds) and $O_2$ into CO and $H_2$ can be used in step b). Preferred catalysts contain nickel, optionally applied to a carrier such as alumina. In step b) as well, a solid-, moving- or fluidized catalyst bed can be employed. A solid bed is preferred.

The reactor used for step b) is preferably of the same type as used for step a).

The main advantage of performing the catalytic partial oxidation after step a) is that extreme conditions in step a) can be avoided. Much of the hydrocarbons can be converted in step a) at relatively low temperature and pressure into a product comprising $H_2$ and CO. At least some of the unconverted hydrocarbons is converted in step b) into $H_2$ and CO. As a result of side reactions, $H_2O$ and

$CO_2$ may also be formed.

If the quantity of unconverted hydrocarbons from step a) is insufficient for a full employment of the capacity of the reactor used in step b), a remaining part of the hydrocarbon-containing feed is preferably led directly to step b). Preferably, step b) is also carried out in the presence of additional steam. Due to the preferably higher temperature at which step b) is carried out, relatively more of the additional hydrocarbons with steam will be converted into $H_2$ and CO than was the case in step a). Moreover, the endothermic reaction of hydrocarbons and steam enables the temperature, which the exothermic reaction of hydrocarbons and oxygen causes to rise, and which preferably lies between 850 and 950 °C, to be optimally controlled.

The amount of additional hydrocarbons and steam preferably added to step b) is between 50 and 100%v and between 0 and 50%v, respectively, of the product from step a) added to step b). The product from step b) generally comprises, besides $H_2$ and CO also $CO_2$ and $H_2O$ and small amounts of unconverted hydrocarbons oxygen, nitrogen and argon. Nitrogen and argon originate from the oxygen-comprising gas and/or from a natural gas feed. The amount of $H_2$ and CO in the product from step b) is preferably between 80 and 90%v on the basis of dry gas.

Subsequently, $CO_2$ is removed in step c) from the product obtained from step b), this can be done by a method known per se, such as membrane- or preferably adsorption techniques e.g. carried out with the aid of molecular sieves or liquid organic amino compounds and/or aqueous alkali carbonate solutions.

A solution containing absorbed $CO_2$ can subsequently be regenerated by, for example, raising its temperature or by passing an inert gas, such a nitrogen, through it.

The thus obtained synthesis gas can, optionally after removing $H_2O$ therefrom, be used for the preparation of, for example, methanol or hydrocarbons.

Preferably at least a part, and in particular substantially all of the $CO_2$ removed in step c) is led to step a) and/or b) in order to attain optimal use of carbon sources in the process according to the invention.

Preferably, besides the $CO_2$ removed in step c), also $CO_2$ will be led to at least one of steps a) and b) which is obtained by partially converting a hydrocarbon-containing feed in an additional step d) at elevated temperature and pressure with steam into a product containing $H_2$ and CO, catalytic partial oxidation of product thus obtained in an additional step e) with an oxygen-comprising gas, and removing $CO_2$ from the product obtained from step e) in an additional step f).

When the feed contains substantially methane, the molar $H_2$/CO ratio of the synthesis gas obtained in step c) will be about 2.7:1 or more if no $CO_2$ is added to step a) and/or b). If $CO_2$ is added to step a) and/or b), said ratio can be reduced, depending on the amount of added $CO_2$. Lowering this molar ratio is important, since the synthesis gas, if employed as starting material for the preparation of methanol or hydrocarbons, preferably has a ratio from 1.5:1 to 2.5:1 and in particular from 1.75:1 to 2.25:1. If in addition to the $CO_2$ obtained from step c) also extra $CO_2$ e.g. obtained from step f) is led to step a) and/or b), it has been found that synthesis gas can be economically obtained with a molar $H_2$/CO ratio from 1.5:1 to 2.5:1 or lower. Such a lowering will not in general be achieved by adding just a part or even all the $CO_2$ obtained in step c). The synthesis gas obtained from step f) has a ratio of about 1.7:1 or more. If the synthesis gas from step c) has a ratio which is lower than that desired, then the desired ratio can be simply obtained by mixing with it a part of the synthesis gas obtained in step f). Accordingly, the process according to the invention shows a great flexibility since all or a large part of the synthesis gas can thus be obtained economically in the desired ratio, so that the ratio of just a relatively small part, if any, of the synthesis gas needs to be brought to the desired level by gas separation or by another known method.

The above statements relating to steps a), b) and c) also apply to steps d), e) and f), respectively.

The $CO_2$ removed in steps c) and f) is preferably, before being added to step a) and/or b) jointly separated from any liquid absorbent. The amount of $CO_2$ obtained from steps c) and f) is preferably approximately equal. The total amount of $CO_2$ which is preferably added to step a) and/or b) is 35 to 65%v of the quantity of methane or natural gas used in step a). Most preferably, the $CO_2$ is added to step a).

In another preferred embodiment of the process according to the invention, in addition to the hydrocarbons and steam to be added to step a), at least a part of a light fraction, preferably a $C_8^-$ fraction, is also led to step a), which light fraction is obtained by converting at least some of the synthesis gas obtained in step c) and possibly in step f) into hydrocarbons in the presence of a catalyst and separating the light fraction from a heavy fraction, preferably the $C_9^+$ fraction, and employing any remaining part of the light fraction as fuel gas in order to generate at least some of the heat needed in step a). In particular, at least a part of a $C_4^-$ fraction is led to step a), which $C_4^-$ fraction is obtained by converting at least some of the synthesis gas obtained in step c) and optionally in step f) into hydrocarbons in the presence of a catalyst and separating the $C_4^-$ fraction from the $C_5^+$ fraction, and employing any remaining part of the $C_4^-$ fraction as fuel gas.

The conversion of synthesis gas obtained in step c) into hydrocarbons can, as is known, be carried out with Fischer-Tropsch catalysts, which contain Fe, Co, Ni and/or Ru. The light fraction and in particular the $C_4^-$ fraction, obtained in the process of preparing middle distillates from synthesis gas from step c), is used as described above. In this context, "middle distillates" is understood to mean hydrocarbon mixtures having a boiling range corresponding substantially to that of the kerosine-and gas oil fractions obtained by atmospheric distillation of crude oil. The middle distillate boiling range is mainly between about 150 and 360 °C.

Middle distillates can be prepared in one or two stages. They are prepared in one stage by passing the synthesis gas obtained from step c) over a Fischer-Tropsch catalyst containing one or more promoters and a carrier material. The products which can be prepared with these catalysts generally have a very wide molecular weight distribution and often comprise, in addition to branched and unbranched paraffins, considerable quantities of olefins and oxygen-comprising organic compounds. Often, only a small part of the obtained products consists of middle distillates. Besides the yield, the cetane number is of the gas oil often leaves much to be desired on account of the presence of the above-mentioned olefins and oxygen-comprising organic compounds. For this reason, a two-stage preparation process is preferably employed in which in a first stage a class of Fischer-Tropsch catalysts is employed, which catalysts have the property that they produce a product containing only very small amounts of oxygen-comprising organic compounds, which product consists almost entirely of unbranched paraffins, many of which boil above the middle distillate range, and in which in a second stage the high-boiling part of the product obtained in the first stage is converted by hydrocracking into middle distillates. The feedstock chosen for the hydrocracking is at least that part of the product whose initial boiling point lies above the final boiling point of the heaviest middle distillate wanted as end product. The hydrocracking, which is characterized by a very low hydrogen consumption, produces middle distillates with a considerably better pour point than those obtained by direct conversion of an $H_2O/CO$ mixture according to the Fischer-Tropsch method.

The Fischer-Tropsch catalysts used in the first stage of the two-stage process contain silica, alumina or silica/alumina as carrier and cobalt together with zirconium, titanium and/or chromium as catalytically active metals in such quantities that 3-60 parts by weight of cobalt and 0.1-100 parts by weight of zirconium, titanium and/or chromium per 100 parts by weight of carrier are present. The catalysts are prepared by applying the appropriate metals to the carrier by kneading and/or impregnating. Before being used, the cobalt catalysts are preferably activated. This activating can suitably be carried out by contacting the catalyst at a temperature of between 200 and 350 °C with hydrogen or a hydrogen-comprising gas.

The conversion of the synthesis gas obtained in step c) into middle distillates is preferably carried out at a temperature of 175-275 °C and at a pressure of 10-75 bar.

The $H_2$ and CO-comprising feedstock, which is converted into middle distillates with the aid of the above-mentioned type of catalysts, preferably has a $H_2/CO$ molar ratio of 1.0-2.5 and in particular 1.25-2.25.

From the thus obtained hydrocarbon mixture a light fraction can be separated preferably the $C_8^-$ fraction and in particular the $C_4^-$ fraction. If the $C_8^-$ fraction or $C_4^-$ fraction is separated, then at least a part of the $C_9^+$ fraction and preferably at least a part of the $C_5^+$ fraction will then be subjected to hydrocracking in order to convert the high boiling point part into middle distillates. The feedstock chosen for the hydrocracking is at least that part of the product whose initial boiling point lies above the final boiling point of the heaviest middle distillate wanted as end product.

Although in the preparation of middle distillates from the product obtained over the cobalt catalyst a feedstock can be used consisting of that part of the product whose initial boiling point lies above the final boiling point of the heaviest middle distillate wanted as end product, preferably the total $C_9^+$ fraction is used for this purpose, and in particular the total $C_5^+$ fraction of the product prepared over the cobalt catalyst, since it has been found that the quality of the benzine, kerosine and gas oil fractions contained therein is improved by the catalytic hydrogen treatment.

The hydrocracking is carried out by contacting the fraction to be treated at elevated temperature and pressure and in the presence of hydrogen with a catalyst containing one or more noble metals form Group VIII on a carrier. A preferred hydrocracking catalyst is one which contains 0.1-2wt.% and in particular 0.2-1wt.% of one or more noble metals from Group VIII on a carrier. Preferred catalysts are those which comprise platinum or palladium as noble metal from Group VIII and comprise silica/alumina as carrier. The hydrocracking is preferably carried out at a temperature of 200-400 °C and in particular 250-350 °C and at a pressure of 5-100 bar and in particular 10-75 bar. If steps d), e) and f) are employed, the hydrogen can suitably be obtained from the product from step f), that usually has an $H_2/CO$ molar ratio greater than 3:1, by separating a part of the $H_2$ e.g. with the aid of an alternating-pressure adsorption apparatus.

If the product prepared over the cobalt catalyst still contains sufficient unconverted hydrogen for performing the hydrocracking, both steps can be carried out in "series flow". In that case, the light fraction, preferably the $C_8^-$ fraction and in particular the $C_4^-$ fraction is not separated after the first step but only after the second step. As is known, carrying out a multi-stage process in series flow means that the entire product from a given stage, without any components being removed from it or added to is, is employed as feedstock for the following stage, which is carried out at substantially the same pressure as the preceding one.

The $C_8^-$ fraction or $C_4^-$ fraction contains, besides hydrocarbons with 1-8 or 1-4 carbon atoms respectively, $H_2O$, $N_2$, Ar and possibly unconverted $H_2$ and CO.

It is attractive to recycle this fraction as a whole back to step a) in order to make the carbon atoms material balance as favourable as possible. However, the drawback of this is that after a time the quantity of $N_2$ and Ar in the system rises to such an extent that the yield of - ultimately - middle distillates starts falling considerably.

It has been found that the wishes concerning the carbon atoms balance can be accommodated to some extent, without detriment to the yield, by adding a part of the $C_8^-$ fraction and in particular the $C_4^-$ fraction to step a) and by burning the other part thereof in order to generate the heat required for step a).

Preferably, between 50 and 80%v of the $C_8^-$ fraction or $C_4^-$ fraction respectively is passed to step a).

Passing the aforementioned part of the $C_8^-$ or $C_4^-$ fraction to step a) can advantageously be combined with the passing to step a) of $CO_2$ removed in step c), either partly, wholly or together with extra $CO_2$ from step f), as described above.

If in addition $CO_2$ from step f) is passed to step a), the light fraction, preferably the $C_8^-$ fraction and in particular the $C_4^-$ fraction of a middle distillate synthesis process based on the synthesis gas from step f), can be used for step a) or step d). Preferably, the synthesis gas from step f) is combined with the synthesis gas from step c) after having been brought to the desired $H_2/CO$ molar ratio. The thus combined synthesis gas is then used for the middle distillate synthesis process. The light fraction, preferably the $C_8^-$ fraction and in particular the $C_4^-$ fraction thus obtained is then used for step a) as described above.

The invention will now be described in more detail by way of example by reference to the accompanying drawings in which Figs. 1-5 represent schematically conventional techniques for preparing synthesis gas from a hydrocarbon feed, whereas Figs. 6 and 7 represent schematically embodiments of the process of the invention.

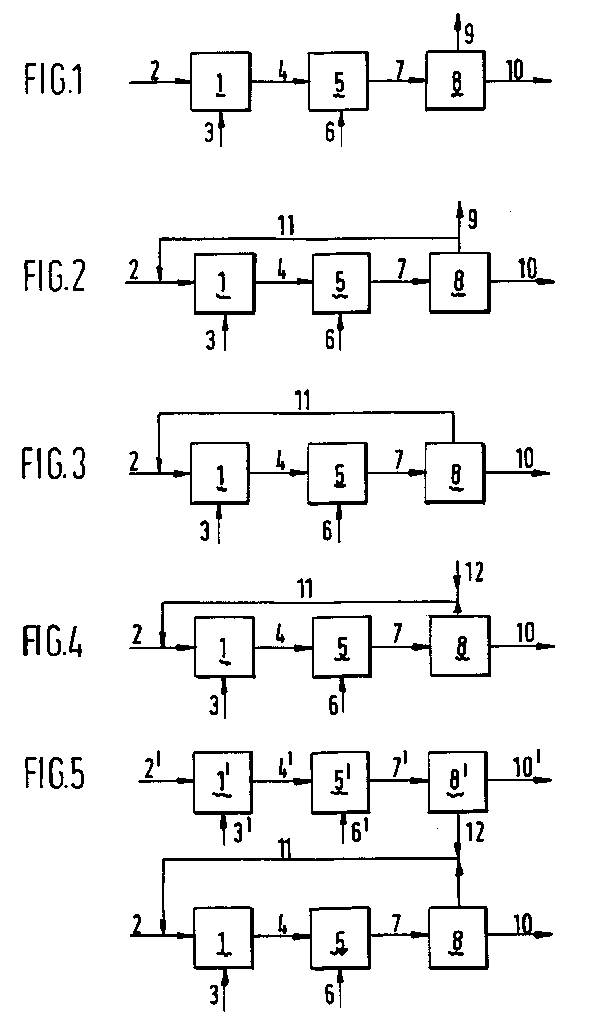

Referring now to Fig. 1 a hydrocarbon-containing feed, preferably methane or natural gas, is led via line 2 and steam via line 3 to reactor 1 wherein step a) is carried out. The product obtained from step a) is led via line 4 to reactor 5 wherein step b) is carried out with the addition of an oxygen-comprising gas via line 6 and preferably with the addition of a remaining part of the hydrocarbon-containing feed (not indicated in Fig.1). The product obtained from step b) is led via line 7 to separator 8 wherein step c) is carried out. $CO_2$ leaves the separator via a line 9. The synthesis gas is discharged via line 10.

In Figs. 2-7 the reference numerals 1-10, in as far as used, refer to the same as in Fig. 1.

According to Fig. 2, a part of the $CO_2$ from step c) is led via line 11 to step a) after having been purified in a suitable apparatus (not shown in Fig. 2).

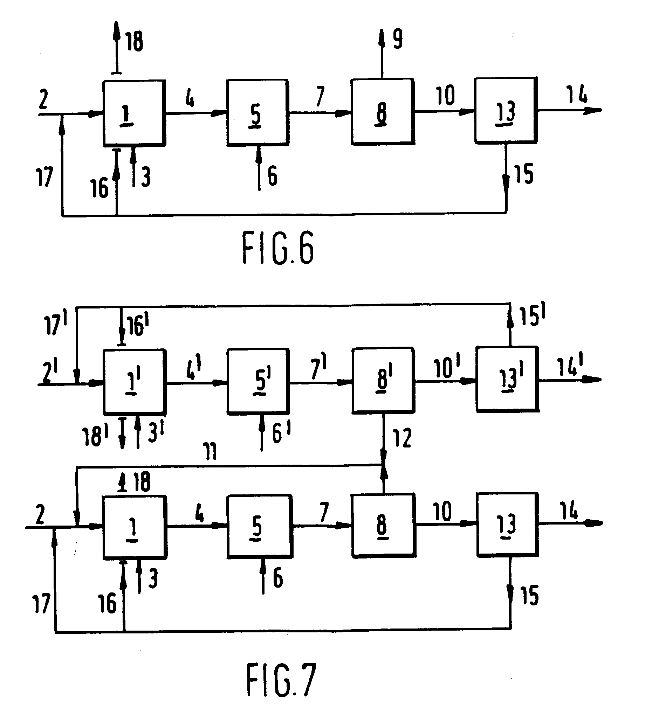

According to Fig. 3, all of the $CO_2$ obtained from step c) is led via line 11 to step a). According to Fig. 4, in addition to the $CO_2$ obtained from step c), an additional quantity of $CO_2$ supplied via line 12 is led via line 11 to step a).

In Fig. 5 the reference numerals 1'-8' and 10' refer to the same as the reference numerals 1-8 and 10, except that step d) is carried out in reactor 1', step e) in reactor 5' and step f) in separator 8'. All of the $CO_2$ separated in step f) is led via lines 12 and 11 to step a) together with the $CO_2$ separated in step c).

According to Fig. 6, the synthesis gas obtained in step c) is led via line 10 to an apparatus 13 for the preparation of middle distillates. The $C_5^+$ fraction leaves this apparatus via line 14; the $C_4^-$ fraction is discharged via line 15 and split into a first part that is led via line 17 to step a) and a second part that is led via line 16 to a combustion unit, not shown, where it is burned to generate at least some of the heat required for step a). The flue gas formed in the combustion unit is discharged via line 18.

The embodiment of the invention represented in Fig. 6 can be expanded with the modifications shown in Figs. 2-5 in which the $CO_2$ from step c) is led partly, wholly or together with extra $CO_2$ from step f) to step a).

In Fig. 7 the previously used reference numerals refer to the same as before. Reference numerals 13'-18' refer to the same as 13-18, except that the $C_4^-$ fraction, as described above, is used for step d). It is also possible - and this is preferable - instead of using apparatus 13' and lines 14'-18', to connect line 10' to line 10 and to lead the synthesis gas from step f), possibly after modifying the molar $H_2/CO$ ratio, to apparatus 13.

## Claims

1. A process for the preparation of synthesis gas for the manufacture of middle distillates from a hydrocarbon-containing feed characterized by the following steps:

   a) 50-99 %v of the hydrocarbons present in the feed is partially converted with steam into a product containing $H_2$ and CO at an elevated temperature from 400-1500 °C, a pressure from 3-50 bar, and at a space velocity from 600-1350 l(S.T.P.) hydrocarbon-containing feed/l catalyst/hour and from 3500-4500 l(S.T.P.)steam/l catalyst/hour,

   b) product from step a) and any remaining part of the feed is subjected to autothermal catalytic partial oxidation with an oxygen-comprising gas at a temperature from 600-1100 °C, a pressure from 10-50 bar and a space velocity relating to the product of step b) from 5000-10000 l(S.T.P.)/l catalyst/hour, and

   c) $CO_2$ is removed from the product obtained from step b), and wherein at least part of the $CO_2$ removed in step c) is led to step a) and/or b),

   wherein at least a part of a light fraction is also led to step a), which light fraction is obtained by converting at least some of the synthesis gas obtained in step c) into light and heavy hydrocarbons at a temperature of 125-350 °C and a pressure of 5-100 bar in the presence of a catalyst and separating the light fraction from a heavy fraction, and that the possible other part of the light fraction is burned in order to generate at least some of the heat needed in step a) and

   wherein the said part that is led to step a) is 40 to 90 %v of the total fraction.

2. The process as claimed in claim 1 characterized in that substantially all of the $CO_2$ removed in step c) is led to step a) and/or b).

3. The process as claimed in claims 1 or 2 characterized in that part of the hydrocarbon-containing feed is employed in step a) and the remainder is led directly to step b).

4. The process as claimed in any one of claims 1-3, characterized in that a hydrocarbon-containing feed is partially converted in an additional step d) at elevated temperature and pressure with steam into a product containing $H_2$ and CO, the product thus obtained is subjected to catalytic partial oxidation in an additional step e) with an oxygen-comprising gas, and $CO_2$ is removed from the product obtained from step e) in an additional step f) and led to at least one of steps a) and b) and wherein at least a part of a light fraction is also led to step a), which light fraction is obtained by converting at least some of the synthesis gas obtained in step f) into light and heavy hydrocarbons.

5. The process as claimed in any one of claims 1-4, characterized in that at least a part of the light fraction which is a $C_8^-$ fraction is also led to step a), which $C_8^-$ fraction is obtained by converting at least some of the synthesis gas obtained in step c) and possibly in step f) into hydrocarbons in the presence of a catalyst and separating the $C_8^-$ fraction from the heavy fraction which is the $C_9^+$ fraction, and that the possible other part of the $C_8^-$ fraction is burned in order to generate at least some of the heat needed in step a).

## Patentansprüche

1. Verfahren zur Herstellung von Synthesegas zur Herstellung von Mitteldestillaten aus einem kohlenwasserstoffhältigen Einsatzmaterial, gekennzeichnet durch die folgenden Stufen:

   a) 50-99 Vol.-% der im Einsatzmaterial vorliegenden Kohlenwasserstoffe werden partiell mit Dampf zu einem $H_2$ und CO enthaltenden Produkt bei einer erhöhten Temperatur von 400-1500° C, einem Druck von 3 bis 50 bar und bei einer Raumgeschwindigkeit von 600-1350 l (Normaltemperatur und -druck) kohlenwasserstoffhältiges Einsatzmaterisl/l Katalysator/Stunde und von 3500-4500 l (Normaltemperatur und -druck) Dampf/l Katalysator/Stunde umgewandelt,

   b) das Produkt aus Stufe a) und ein etwa verbliebener Teil des Einsatzmaterisls werden einer autothermalen katalytischen partiellen Oxidation mit einem sauerstoffhältigen Gas bei einer Temperatur von 600-1100° C, einem Druck von 10-50 bar und einer Raumgeschwindigkeit, bezogen auf das Produkt von Stufe b), von 5000-10000 l (Normaltemperatur und -druck)/l Katalysator/Stunde unterworfen, und

   c) aus dem aus Stufe b) erhaltenen Produkt wird $CO_2$ abgetrennt, wobei wenigstens ein Teil des in Stufe c) abgetrennten $CO_2$ zu Stufe a) und/oder b) geführt wird,

   worin wenigstens ein Teil einer leichten Fraktion ebenfalls der Stufe a) zugeführt wird, welche leichte Fraktion durch Umwandeln wenigstens eines Teils des in Stufe c) erhaltenen Synthesegases zu leichten und schweren Kohlenwasserstoffen bei einer Temperatur von 125-350° C und einem Druck von 5-100 bar in Anwesenheit eines Katalysators und Abtrennen der leichten Fraktion von einer schweren Fraktion erhalten wird, und daß der mögliche andere Teil der leichten Fraktion verbrennt wird, um wenigstens einen Teil der in Stufe a) erforderlichen Wärme zu bilden, und worin jener Teil, der zu Stufe a) geführt wird, 40-90 Vol.-% der Gesamtfraktion ausmacht.

2. Verfahren nach Anspruch 1, dadurch gekennzeichnet, daß im wesentlichen die Gesamtmenge des in Stufe c) abgetrennten $CO_2$ zu Stufe a) und/oder b) geführt wird.

3. Verfahren nach Anspruch 1 oder 2, dadurch gekennzeichnet, daß ein Teil des kohlenwasserstoffhältigen Einsatzmaterials in Stufe a) verwendet wird und der Rest direkt der Stufe b) zugeführt wird.

4. Verfahren nach einem der Ansprüche 1 bis 3, dadurch gekennzeichnet, daß ein kohlenwasserstoffhältiges Einsatzmaterial partiell in einer zusätzlichen Stufe d) bei erhöhter Temperatur und erhöhtem Druck mit Dampf zu einem $H_2$ und CO enthaltenden Produkt umgewandelt wird, das solcherart erhaltene Produkt einer katalytischen partiellen Oxidation in einer zusätzlichen Stufe e) mit einem sauerstoffhältigen Gas unterworfen wird und aus dem aus Stufe e) erhaltenen Produkt in einer weiteren Stufe f) $CO_2$ abgetrennt und zu wenigstens einer der Stufen a) Und b) geführt wird, und worin wenigstens ein Teil einer leichten Fraktion ebenfalls zu Stufe a) geführt wird, welche leichte Fraktion durch Überführen wenigstens eines Teils des in Stufe f) erhaltenen Synthesegases in leichte und schwere Kohlenwasserstoffe erhalten wird.

5. Verfahren nach einem der Ansprüche 1 bis 4, dadurch gekennzeichnet, daß wenigstens ein Teil der leichten Fraktion, die eine $C_8{}^-$-Fraktion ist, ebenfalls zu Stufe a) geführt wird, welche $C_8{}^-$-Fraktion durch Überführen wenigstens eines Teils des in Stufe c) Und gegebenenfalls in Stufe f) erhaltenen Synthesegases in Kohlenwasserstoffe in Anwesenheit eines Katalysators und Abtrennen der $C_8{}^-$-Fraktion von der schweren Fraktion, welches die $C_9{}^-$-Fraktion ist, erhalten wird, und daß der mögliche andere Teil der $C_8{}^-$-Fraktion verbrennt wird, um wenigstens einen Teil der in Stufe a) erforderlichen Wärme zu bilden.

**Revendications**

1. Un procédé pour la préparation de gaz de synthèse en vue de la production de distillats moyens à partir d'une charge contenant des hydrocarbures caractérisé par les étapes suivantes :

a) une proportion de 50 à 99 % en volume des hydrocarbures présents dans la charge est transformée avec de la vapeur d'eau en un produit contenant $H_2$ et CO à une température élevée comprise entre 400 et 1500° C, une pression comprise entre 3 et 50 bars et une vitesse spatiale comprise entre 600 et 1350 litres (dans les conditions normalisées de température et de pression) de charge contenant des hydrocarbures par litre de catalyseur et par heure et entre 3500 et 4500 litres de vapeur d'eau (dans les conditions normalisées de température et de pression) par litre de catalyseur et par heure,

b) le produit de l'étape a) et toute partie restante de la charge sont soumis à une oxydation partielle catalytique autothermique avec un gaz comprenant de l'oxygène à une température comprise entre 600 et 1100° C, une pression comprise entre 10 et 50 bars et une vitesse spatiale concernant le produit de l'étape b) comprise entre 5000 et 10 000 litres (dans les conditions normalisées de température et de pression) par litre de catalyseur et par heure et

c) $CO_2$ est séparé du produit obtenu par l'étape b) et au moins une partie du $CO_2$ séparé dans l'étape c) est conduite à l'étape a) et/ou à l'étape b),

où au moins une partie d'une fraction légère est conduite aussi à l'étape a), cette fraction légère étant obtenue en transformant au moins une partie du gaz de synthèse obtenu dans l'étape c) en hydrocarbures légers et lourds à une température de 125-130° C et une pression de 5-100 bars en présence d'un catalyseur et en séparant la fraction légère d'une fraction lourde, et l'autre partie possible de la fraction légère est brûlée de manière à produire au moins une partie de la chaleur nécessaire dans l'étape a), et où la partie qui est conduite à l'étape a) est comprise entre 40 et 90 % en volume de la fraction totale.

2. Le procédé selon la revendication 1, caractérisé en ce que la quasi-totalité du $CO_2$ séparé dans l'étape c) est amenée à l'étape a) et/ou à l'étape b).

**3.** Le procédé selon les revendications 1 ou 2, caractérisé en ce qu'une partie de la charge contenant des hydrocarbures est utilisée dans l'étape a) et le reste est amené directement à l'étape b).

**4.** Le procédé selon l'une quelconque des revendications 1-3, caractérisé en ce qu'une charge contenant des hydrocarbures est transformée au moins partiellement dans une étape supplémentaire d) à température et pression élevées avec de la vapeur d'eau en un produit contenant $H_2$ et CO, le produit ainsi obtenu est soumis à une oxydation catalytique partielle dans une étape supplémentaire e) avec un gaz comprenant de l'oxygène, et $CO_2$ est séparé du produit obtenu par l'étape e) dans une étape supplémentaire f) et conduit à au moins une des étapes a) et b), et au moins une partie d'une fraction légère est amenée aussi à l'étape a), cette fraction légère étant obtenue par conversion d'au moins une partie du gaz de synthèse obtenu dans l'étape f) en hydrocarbures légers et lourds.

**5.** Le procédé selon l'une quelconque des revendications 1-4, caractérisé en ce qu'au moins une partie de la traction légère qui est une fraction $C_8^-$ est amenée aussi à l'étape a), cette traction $C_8^-$ étant obtenue en transformant au moins une partie du gaz de synthèse obtenu dans l'étape c) et éventuellement dans l'étape f) en hydrocarbures en présence d'un catalyseur et en séparant la fraction $C_8^-$ de la fraction lourde qui est la fraction $C_9^+$, et que l'autre partie possible de la fraction $C_8^-$ est brûlée de manière à produire au moins une partie de la chaleur nécessaire dans l'étape a).

FIG.1

FIG.2

FIG.3

FIG.4

FIG.5

FIG.6

FIG.7